# FASCICULE DE BREVET EUROPEEN

(11) **EP 4 442 580 B1**
(45) Date de publication et mention de la délivrance du brevet: **23.09.2026**
(21) Numéro de dépôt: 24168794.6
(22) Date de dépôt: 05.04.2024
(51) Int. Cl.: B64F 5/60, H04L 43/50, H04L 67/12, H04L 41/0806, H04L 41/14

(54) **PROCÉDÉ DE PARTAGE DE DONNÉES ENTRE UN SUPERVISEUR DE TRANSFERT DE DONNÉES D AÉRONEF ET UNE PLURALITÉ DE STATIONS DE TEST DE SYSTÈMES D AÉRONEF**
VERFAHREN ZUM TEILEN VON DATEN ZWISCHEN EINEM FLUGZEUG-DATENÜBERTRAGUNGSÜBERWACHER UND MEHREREN FLUGZEUGSYSTEM-TESTSTATIONEN
METHOD FOR SHARING DATA BETWEEN AN AIRCRAFT DATA TRANSFER SUPERVISOR AND A PLURALITY OF AIRCRAFT SYSTEM TEST STATIONS

(30) Priorité: 07.04.2023 FR 2303493
(43) Date de publication de la demande: 09.10.2024
(73) Titulaire: Dassault Aviation, 92210 Saint-Cloud (FR)
(72) Inventeur: GRAS, Jean-Noël, 13804 Istres Cedex (FR); GUESDON, Arnaud, 13804 Istres Cedex (FR); BENICHOU, Jérémy, 13804 Istres Cedex (FR); GUILLEMIN, Florent, 13804 Istres Cedex (FR); SECCHI, Alain, 13804 Istres Cedex (FR); LECARDEZ, Eric, 13804 Istres Cedex (FR); WAJNBERG-KOHN, Jérémy, 13804 Istres Cedex (FR); FOURCADIER, Thomas, 13804 Istres Cedex (FR); RICHIER, Paul, 13804 Istres Cedex (FR); CHAZAL, Jacques Antoine, 13804 Istres Cedex (FR)
(74) Mandataire: Lavoix

(56) Documents cités:
- EP-A1- 3 087 401

## Description

La présente invention concerne un procédé de partage de données entre un superviseur de transfert de données et une pluralité de stations de test de systèmes d'aéronef dans un banc d'essai d'aéronef, le superviseur de transfert de données et la pluralité de stations de test de systèmes d'aéronef étant raccordés entre eux par un lien de transfert de données, le lien de transfert étant propre à faire circuler des messages comportant un entête comprenant au moins un indicateur de type de message.

Un tel procédé est destiné par exemple à être mis en œuvre dans un banc d'intégration avion.

Les aéronefs modernes sont construits généralement à base de plusieurs systèmes d'aéronef produits par des équipementiers. Les systèmes d'aéronef sont ensuite intégrés par un avionneur lors de l'assemblage final de l'aéronef.

Lors de l'assemblage final, l'avionneur assemble tous les systèmes d'aéronef sur une même plateforme, et effectue des tests multi-systèmes en présence de tous les systèmes d'aéronef pour s'assurer du fonctionnement fiable de l'ensemble des systèmes.

Il est souvent nécessaire d'effectuer des tests impliquant une pluralité de systèmes d'aéronef, préalablement à l'assemblage final de l'aéronef.

Ces tests incluent par exemple la validation des interfaces des systèmes d'aéronef, notamment des bus numériques et des signaux analogiques, et la validation opérationnelle nominale de l'ensemble.

Ces tests incluent dans certains cas des essais de fonctionnement dégradé, l'entrainement des équipes d'essais en vol avant le premier vol, des tests de corrections et de non-régression, et une validation de la documentation de vol.

Pour réaliser ces tests, il est connu d'intégrer partiellement les systèmes d'aéronef sur un banc d'essai d'aéronef, avant l'assemblage final de l'aéronef. Un banc d'essai d'aéronef permet de faire fonctionner les systèmes d'aéronef conjointement, sans pour autant qu'ils soient intégrés dans un aéronef assemblé.

Par définition, un banc d'essai d'aéronef n'est pas un aéronef complet. En particulier, le banc d'essai ne comprend généralement pas de circuit carburant, ni de gouvernes mobiles, qui sont pourtant présents sur un aéronef assemblé.

Cependant, les systèmes d'aéronef qui sont testés sur le banc d'essai ont souvent besoin pour fonctionner de certaines données produites par des équipements qui ne sont pas montés ou qui ne sont pas actifs sur le banc d'essai. Les systèmes d'aéronefs sont alors programmés pour fournir des données de simulation qui se substituent aux données réelles engendrées lors de l'utilisation d'un aéronef totalement assemblé.

WO2015097105 décrit un procédé de partage de données entre une pluralité de stations de test de systèmes d'avionique comprenant un anneau de transmission de données sur lequel peut être interfacé un superviseur.

Un but de l'invention est de fournir un procédé et un système qui permette de tester simplement et réalistement l'intégration de systèmes d'aéronef entre eux, notamment pour valider leur fonctionnement commun, normal ou dégradé, sans avoir à disposer d'un aéronef totalement assemblé.

À cet effet, l'invention a pour objet un procédé de partage de données selon la revendication 1.

Le procédé selon l'invention peut comprendre l'une ou plusieurs des caractéristiques des revendications 2 à 12, prise(s) isolément ou suivant toutes combinaisons techniquement possible.

L'invention a également pour objet un système de partage de données selon la revendication 13.

L'invention a aussi pour objet une station de test d'un système d'aéronef pour un banc d'essai d'aéronef selon la revendication 14.

L'invention a également pour objet un superviseur de transfert de données selon la revendication 15.

L'invention sera mieux comprise à la lecture de la description qui va suivre, donnée uniquement à titre d'exemple, et faite en se référant aux dessins annexés, sur lesquels :
- [Fig.1] La figure 1 est une vue schématique d'un système de partage de données au sein d'un banc d'essai d'aéronef, comprenant un superviseur de transfert de données et une pluralité de stations de test de systèmes d'aéronef, pour la mise en œuvre d'un premier procédé de partage de données selon l'invention ;
- [Fig.2] La figure 2 est une représentation schématique de la structure d'un message destiné à être envoyé via un lien de transfert de données du système de la figure 1 ;
- [Fig.3] La figure 3 est une vue du champ de données d'un message de table de définition de données échangées circulant sur le lien de transfert de données ;
- [Fig.4] La figure 4 est une vue du champ de données d'un message de données de simulation ;
- [Fig.5] La figure 5 est une vue schématique d'un champ de données d'un message de données de configuration ;
- [Fig.6] La figure 6 est une vue schématique de la mise en œuvre du procédé selon l'invention, lors de l'initialisation du système de partage ;
- [Fig.7] La figure 7 est une vue schématique de la mise en œuvre du procédé, dans un mode de transmission de données de simulation ;
- [Fig.8] La figure 8 est une vue analogue à la figure 6, dans un mode conjoint de transmission de données de simulation et de configuration d'états.

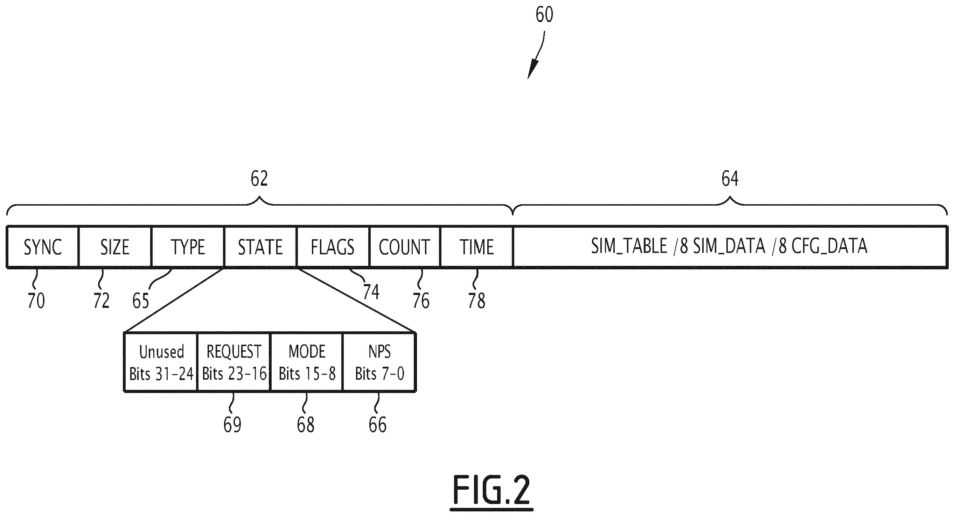

Les figures 2 à 5 comportent une codification de la syntaxe qui correspond à des champs nommés en anglais, conformément à la pratique usuelle dans les protocoles de transmission de données. Si nécessaire, une traduction en français de ces termes est donnée dans la description ci-après.

Un premier procédé de partage de données selon l'invention est mis en œuvre dans un système 10 de partage de données au sein d'un banc d'essai 12 d'aéronef.

Le système de partage 10 comporte une pluralité de stations 14A, 14B, 14C de test de systèmes d'aéronef et au moins un superviseur 16 de transfert de données, destiné à superviser fonctionnellement les systèmes d'aéronef des stations 14A, 14B, 14C pour effectuer des tests multi-systèmes.

Le système de partage 10 comporte en outre un lien 17 de transfert de données (ou bus de données) entre les stations 14A, 14B, 14C et le superviseur de transfert de données 16.

Les tests multi-systèmes effectués sur le banc d'essai 12 en utilisant le système de partage 10 incluent par exemple une validation des interfaces des systèmes d'aéronef présents dans les stations de tests 14A, 14B, 14C, une validation opérationnelle nominale d'ensemble des systèmes d'aéronef, un fonctionnement en cas dégradés ou en présence de pannes, l'entrainement d'équipes d'essai en vol avant un premier vol de l'aéronef, des tests de correction/non régression, et/ou la validation de la documentation de vol.

Le nombre de stations 14A, 14B, 14C est par exemple supérieur à 2, notamment supérieur à 5, avantageusement supérieur à 20.

Chaque station 14A, 14B, 14C comporte un ou plusieurs équipements 18 d'un système d'aéronef, et au moins un calculateur 20 associé au système d'aéronef.

L'équipement 18 est par exemple un équipement actif de l'aéronef, tel qu'un actionneur, un afficheur tête haute, un ventilateur, ou un équipement logiciel, tel qu'un calculateur d'avionique, un calculateur moteur, un calculateur de système air.

Le banc d'essai 12 ne comporte pas tous les systèmes d'aéronef ou/et tous les équipements 18 des systèmes d'aéronef permettant le taxiage, le décollage, le vol, et l'atterrissage d'un aéronef assemblé. En particulier, le banc d'essai 12 est par exemple dépourvu de surfaces mobiles, telles que des gouvernes, ou d'autres équipements nécessaires au taxiage, au décollage, au vol, et à l'atterrissage d'un aéronef.

Le banc d'essai 12 est en particulier dépourvu de système air actif permettant la pressurisation et la climatisation de la cabine. Il est en outre dépourvu de moteur actif et de réservoir de carburant associé.

Par exemple, le moteur et le réservoir de carburant sont chacun associés à un calculateur 20 qui a besoin dans son fonctionnement de disposer de mesures extérieures. Par exemple, le calculateur du moteur doit disposer de la quantité de carburant présente dans le réservoir et de celle distribuée au moteur. Les calculateurs associés au moteur et au réservoir doivent en outre disposer de la pression extérieure simulée par d'autres systèmes du banc d'essai 20, qui diminue avec l'altitude, car ceci influe sur l'état du carburant et donc sur les débits fournis au moteur.

Le calculateur 20 de chaque station 14A, 14B, 14C comporte au moins un processeur 22 et au moins une mémoire 24 comportant des modules logiciels propres à être exécutés par le processeur 22.

En variante, le calculateur 20 comporte des composants logiques programmables ou des circuits intégrés dédiés, destinés à réaliser les fonctions des modules logiciels qui seront décrits ci-après.

Les modules logiciels inclus dans la mémoire 24 comprennent un module 26 de gestion et de commande d'états de chaque équipement 18, un module 28 de simulation de données d'environnement de l'équipement 18, et un module 30 d'émission/réception de messages sur le lien de transfert 17.

Le module de gestion et de commande 26 est propre notamment à recueillir les données physiques mesurées par chaque équipement 18, notamment par des capteurs présents sur chaque équipement 18. Il est propre en outre à appliquer des commandes d'état reçues du superviseur de transfert de données 16 via le lien de transfert 17 pour placer l'équipement 18 dans l'état commandé.

Le module de simulation 28 est propre à fournir des données de simulation d'environnement de l'équipement 18, qui correspondent aux données réelles que fournirait l'équipement 18 au système avion ou à d'autres systèmes avion, si l'équipement était monté sur un aéronef réel.

L'équipement 18, lorsqu'il est monté sur le banc d'essai 20, ne produit pas les données réelles.

Les données simulées sont obtenues par modélisation au moyen d'un modèle de fonctionnement d'équipement, à partir de données reçues de l'équipement 18, et éventuellement de données fournies à la station 14A, 14B, 14C via le lien de transfert 17.

Le module de simulation 28 est propre par exemple à simuler les données qui seraient produites par un capteur de l'équipement 18, notamment un capteur de pression, un capteur de débit, et/ou un capteur d'intensité électrique.

Il est propre à fournir à l'équipement 18 ou à un autre équipement 18 du même système d'aéronef ou d'un autre système d'aéronef, les données simulées qui seraient issues de ces capteurs, pour permettre le fonctionnement normal de l'autre équipement 18, comme s'il était intégré au sein d'un aéronef assemblé.

Le module d'émission/réception 30 est propre à émettre, sur le lien de transfert 17, des messages de données de simulation engendrées par le module de simulation 28, et à recevoir des messages de données de simulation et des messages de données de commande d'états provenant du superviseur de transfert de données 16 via le lien de transfert 17, comme on le décrira plus bas.

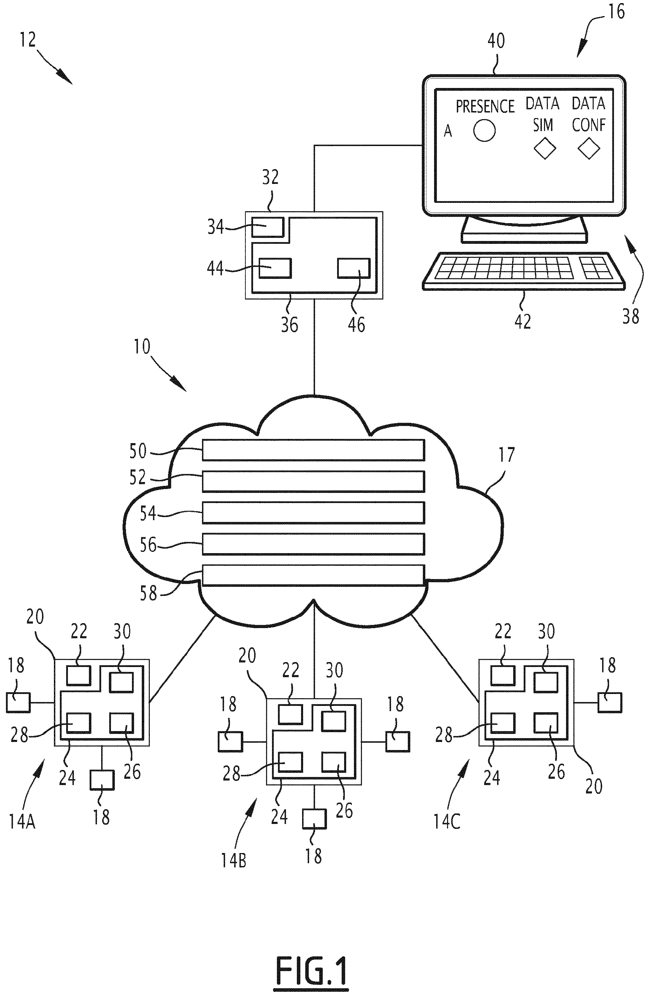

En référence à la figure 1, le superviseur de transfert de données 16 comporte un calculateur 32, comportant au moins un processeur 34 et au moins une mémoire 36 contenant des modules logiciels propres à être exécutés par le processeur 34. En variante, le calculateur 32 comporte des composants logiques programmables ou des circuits intégrés dédiés, destinés à réaliser les fonctions des modules qui seront décrits ci-après.

Le superviseur de transfert de données 16 comporte en outre une interface homme-machine 38.

L'interface homme-machine 38 comprend dans cet exemple un afficheur 40, et au moins un organe de commande 42 tel qu'un clavier, une souris et/ou un écran tactile.

Les modules logiciels contenus dans la mémoire 36 comprennent un module 44 d'émission/réception de données, et un module 46 de gestion d'affichage sur l'afficheur 40.

Le module 46 de gestion d'affichage est propre à engendrer et à afficher des écrans d'interface sur l'afficheur 40, en particulier, au moins au moins un écran de supervision des stations 14A, 14B, 14C connectées sur le lien de transfert 17, un écran de suivi des données de simulation collectées par le module d'émission/réception 44, et au moins un écran de pilotage d'états d'équipements 18 permettant à un utilisateur de piloter des états de commande des équipements 18 de systèmes d'aéronef présents dans les stations 14A, 14B, 14C.

Le module d'émission/réception 44 est propre à émettre des messages de données de commande d'états d'équipements 18, avantageusement sur la base des états sélectionnés par un utilisateur via l'écran de pilotage et à les fournir au lien de transfert 17. Il est propre à recevoir des messages de données de simulation provenant des différentes stations 14A, 14B, 14C en vue de leur redistribution à d'autres stations 17A, 17B, 17C et/ou pour alimenter l'écran de suivi des données de simulation.

Le lien 17 de transmission de données entre le superviseur de transfert de données 16, et chaque station 14A, 14B, 14C est propre à faire circuler des messages entre le superviseur de transfert de données 16 et chaque station de test de système d'aéronef 14A, 14B, 14C suivant un protocole de transmission utilisant des messages présentant une syntaxe prédéfinie.

En référence à la figure 1, le lien de transfert de données 17 comporte une couche physique 50, une couche de transfert de données 52, une couche réseau 54, une couche de transport 56, et une couche applicative 58.

Il est propre à fonctionner suivant un protocole pair-à-pair (« peer-to-peer » en anglais) dans lequel des messages sont échangés entre le superviseur de transfert de données 16 et les stations 14A, 14B, 14C, chacun étant identifié par une adresse propre, en particulier par une adresse IP.

La couche physique 50 est par exemple une couche Ethernet, notamment une couche Ethernet base 100.

La couche de transfert de données 52 est par exemple une couche Ethernet réalisée suivant la norme IEEE 802.3 CD.

La couche de réseau 54 met en œuvre avantageusement le protocole IPV4.

La couche de transport 56 met en œuvre avantageusement le protocole UDP, le superviseur de transfert de données 16 et chaque station 14A, 14B, 14C étant chacun munis d'une adresse, notamment d'une adresse IP et d'un port de transmission et de réception.

La couche applicative 58 est propre à permettre la circulation de messages au sein du lien 17, entre le superviseur de transfert de données 16 et chacune des stations 14A, 14B, 14C.

Le superviseur de transfert de données 16 est avantageusement le maître de la vitesse de transmission (périodique ou asynchrone).

Le superviseur de transfert de données 16 est en outre maître de l'émission de messages sur le lien de transfert 17. Chaque station 14A, 14B, 14C est esclave, et n'envoie pas spontanément de messages sur le lien de transfert 17, sans avoir reçu préalablement un message du superviseur de transfert de données 16.

En référence aux figures 2 à 5, les messages 60 échangés sur le lien de transfert 17 présentent tous la même syntaxe, qui sera décrite ci-après.

En référence aux figures 2 à 5, chaque message 60 est formé d'au moins un paquet de bits, éventuellement de plusieurs paquets de bits. Chaque message 60 comporte un entête 62 présentant une syntaxe prédéterminée, et un champ de données 64.

L'entête 62 comprend un indicateur 65 de type de message, un indicateur 66 de présence sur le lien de transfert 17, et un indicateur 68 de mode de fonctionnement.

L'entête 62 comprend en outre avantageusement un mot 70 de synchronisation, un indicateur de taille de message 72, un ou plusieurs drapeaux 74, un compteur 76 de message, et un indicateur 78 d'horloge.

Comme indiqué plus haut, le lien de transfert de données 17 est propre à transférer des messages 60 destinés au partage de données de simulation entre les stations 14A, 14B, 14C et le superviseur de transfert de données 16 et à l'inverse, des données de configuration d'états des équipements 18 des systèmes d'aéronef depuis le superviseur 16 vers chaque station 14A, 14B, 14C.

L'indicateur de type de message 65 est propre à fournir une identification du type de message choisi parmi un message de test, un message de table de définition de données échangées, un message de données de simulation, et un message de données de configuration.

Un message de test est un message envoyé périodiquement, à une fréquence donnée, par exemple 1 Hz, par le superviseur de transfert de données 16, pour tester la présence de chaque station 14A, 14B, 14C et son statut sur le lien de transfert 17.

Un tel type de message est aussi engendré par chaque station 14A, 14B, 14C en réponse à un message de test reçu du superviseur de transfert de données 16 pour indiquer la présence de la station 14A, 14B, 14C sur le lien de transfert 17 et son statut.

Un message de table de définition de données échangées est un message émis une fois par le superviseur de transfert de données 16 afin de définir pour chaque station 14A, 14B, 14C, la liste des données de simulation que le superviseur de transfert de données 16 requiert de la station 14A, 14B, 14C pour le partage à travers le lien de transfert 17.

Un tel message est également émis une fois par chaque station 14A, 14B, 14C pour indiquer une liste de données de simulation dont la station de test 14A, 14B, 14C a besoin de recevoir à travers le lien de transfert 17 pour opérer le ou chaque équipement 18.

Un message de données de simulation est un message généralement périodique, émis par le superviseur de transfert de données 16 vers une station 14A, 14B, 14C pour transmettre les valeurs des données de simulation requises par la station 14A, 14B, 14C via le lien de transfert 17.

En réponse à un tel message, un autre message de données de simulation est émis par la station 14A, 14B, 14C pour transmettre les valeurs des données de simulation requises par le superviseur de transfert de données 16 via le lien de transfert 17.

Les messages de données de simulation sont transmis sur le lien de transfert 17 lorsqu'un mode de transmission de données de simulation est actif ou lorsqu'un mode conjoint de transmission de données de simulation et de données de configuration est actif.

Un message de données de configuration est un message généralement non périodique envoyé par le superviseur de transfert de données 16 sur le lien de transfert 17 pour transmettre à une station 14A, 14B, 14C, des données de configuration d'états d'équipement à appliquer par un équipement 18 de la station 14A, 14B, 14C.

En réponse à un message de données de configuration, un autre message de données de configuration est transmis depuis une station 14A, 14B, 14C sur le lien de transfert 17 pour transmettre au superviseur de transfert de données 16 une liste d'états effectifs des équipements 18 de la station 14A, 14B, 14C.

Les messages de données de configuration sont transmis sur le lien de transfert 17 lorsqu'un mode de transmission de données de configuration est actif ou lorsqu'un mode conjoint de transmission de données de simulation et de données de configuration est actif.

Les messages de données de configuration, les messages de données de simulation et les messages de table de définition sont prioritaires par rapport aux messages de test. Par ailleurs, les messages de données de simulation sont prioritaires par rapport aux messages de données de configuration.

Généralement, le type de message est codé par un nombre correspondant au type de message tel que désigné dans une table de correspondance.

L'indicateur de présence 66 sur le lien de transfert 17 est un indicateur binaire initialement nul. Il est passé à la valeur égale à 1 lorsque les étapes d'initialisation du système de transfert 10 ont été réalisées, et lorsqu'une station 14A, 14B, 14C est dans un mode de transmission de données de simulation, dans un mode de transmission de données de configuration ou dans un mode de transmission conjointe de données de simulation et de données de configuration.

L'indicateur de mode 68 est propre à indiquer le type de mode d'opération d'une station 14A, 14B, 14C, commandé ou/et effectif.

Lorsqu'un message 60 est émis par le superviseur de transfert de données 16, l'indication d'un mode particulier dans l'indicateur de mode 68, par exemple un mode de transmission de données de simulation ou/et de configuration, résulte en une commande de la station de test 14A, 14B, 14C pour qu'elle adopte ce mode d'opération.

A l'inverse, lorsque le message est émis par une station 14A, 14B, 14C, l'indication d'un mode particulier dans l'indicateur de mode 68 confirme le mode d'opération de la station 14A, 14B, 14C.

Les modes d'opération possibles sont un mode d'attente, avant l'initialisation du système de transfert 10, un mode de transmission de données de simulation, dans lequel la station 14A, 14B, 14C est activée pour transmettre des données de simulation et pour en recevoir, un mode de transmission de données de configuration, dans lequel la station 14A, 14B, 14C est propre à recevoir des données de configuration provenant du superviseur de transfert de données 16, et à renvoyer des données de statut de configuration d'états au superviseur de transfert de données 16, et avantageusement un mode conjoint de transmission de données de simulation et de données de configuration dans lequel les deux possibilités de transmission sont activées simultanément.

Eventuellement, il est possible de commander une non transmission des données de configuration de chaque station 14A, 14B, 14C vers le superviseur de transfert de données 16, même dans le mode de transmission de données de configuration en désactivant un champ 69 de requête de l'entête 62 du message 60.

Le drapeau 74 est propre à être activé par exemple lorsque le message 60 constitue une réponse d'une station 14A, 14B, 14C à un message de configuration provenant du superviseur de transfert de données 16, requérant les valeurs de tous les états des équipements 18 de la station 14A, 14B, 14C.

Ces valeurs d'états sont alors utilisées par le superviseur de transfert de données 16 pour mettre à jour les écrans d'interface affichés sur l'afficheur 40 de l'interface machine 38.

Le compteur 76 s'incrémente à chaque message transmis, afin de pouvoir tester le rafraichissement des messages. Il est par exemple établi sur trente-deux bits.

L'indicateur d'horaire 78 code par exemple l'horaire courant dans un référentiel d'horaire par exemple UTC, en le calculant avantageusement en millisecondes sur trente-deux bits.

Les données présentes dans le champ de données 64 du message 60 diffèrent en fonction du type de message.

Pour les messages de test, le champ de données est vide.

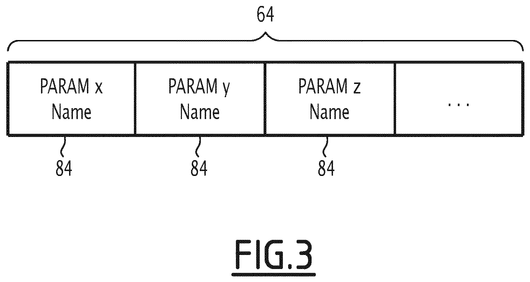

Comme illustré par la figure 3, les données présentes dans le champ de données 64 d'un message de table de définition comprennent la liste des noms 84 des données de simulation que doit recevoir celui qui émet le message, à savoir les noms 84 des données de simulation requises par le superviseur de transfert de données 16 lorsque le superviseur de transfert de données 16 émet le message à destination de la station 14A, 14B, 14C, et les noms 84 des données requises par la station 14A, 14B, 14C, lorsque la station 14A, 14B, 14C émet le message à l'attention du superviseur de transfert de données 16.

La liste des noms des données 84 est par exemple transmise en format ASCII et codée sur trente-deux caractères séparés par une ponctuation.

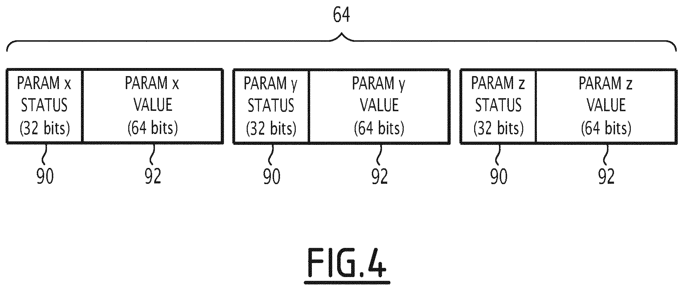

Dans le cas d'un message transmettant des données de simulation, comme illustré par la figure 4, le champ de données 64 est composé d'un ou plusieurs paquets de message, chaque paquet comprenant une valeur 90 de statut de donnée, et une valeur 92 effective de la donnée.

La valeur 90 de statut de données indique par exemple une validité de la donnée, un état de donnée fournie par défaut, un état de donnée statique ou dynamique et un état de rafraichissement de la donnée.

La valeur 92 de la donnée est par exemple définie sous forme de données double flottante, toute flottante, de valeurs entières, ou de mots bruts discrets.

L'ordre de présence des données dans le champ de données 64 est choisi comme étant celui de la table de définition transmise par le message de table de définition de données échangées.

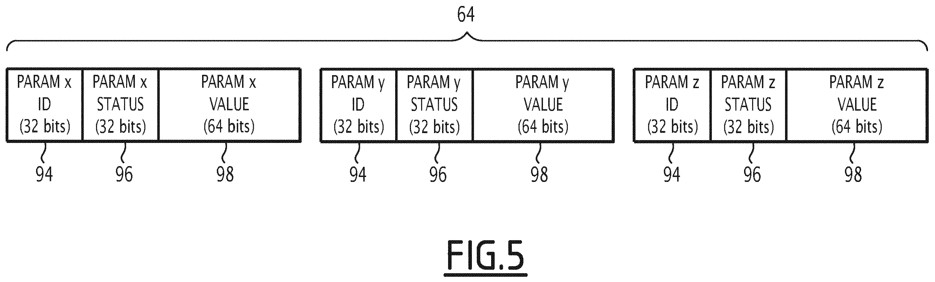

En référence à la figure 5, les données présentes dans le champ de données 84 d'un message de configuration d'états comprennent au moins un paquet de données comprenant chacun un champ 94 d'identification de données de configuration d'états, un statut 96 de la donnée, et une valeur 98 de la donnée de configuration d'états.

Le statut de la donnée est choisi parmi un statut dans lequel la valeur de la donnée n'est pas prise en compte ou un statut dans lequel la valeur de la donnée est prise en compte, notamment en écrasant les éventuelles valeurs de données précédentes.

Un procédé de partage de données selon l'invention, mis en œuvre à l'aide du système de partage de données 10 sur le banc d'essai 12 va maintenant être décrit.

Initialement, chaque station 14A, 14B, 14C est dans un mode d'attente.

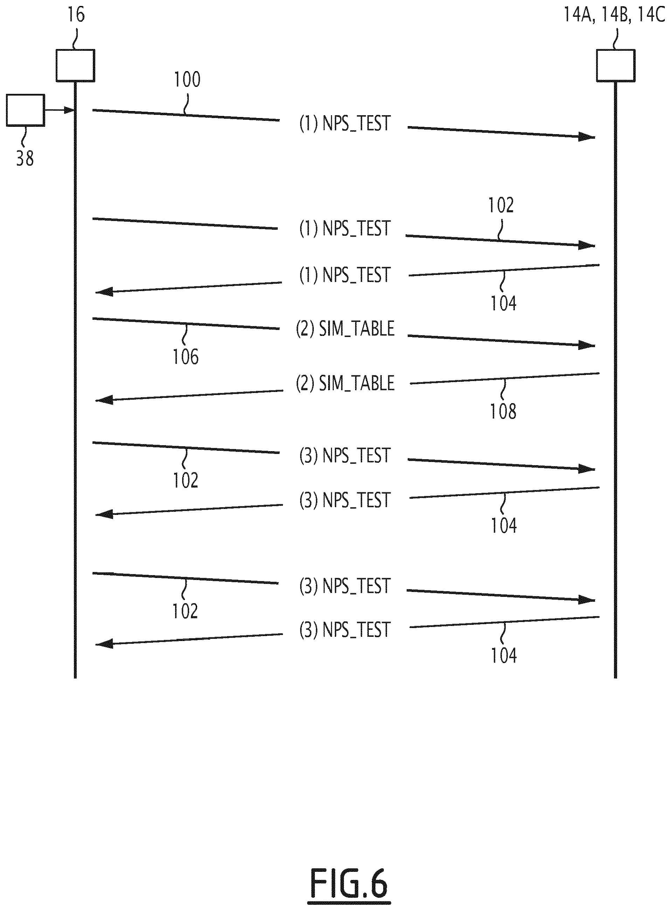

En référence à la figure 6, pour initialiser le système de partage 10, le superviseur de transfert de données 16 envoie un premier message de test 100 à l'attention de la station 14A, 14B, 14C. Le message 100 inclut un indicateur 65 de type de message correspondant à un message de test, un indicateur de présence 66 correspondant à une absence sur le lien de transfert 17, et un indicateur de mode 68 correspondant à un mode d'attente.

Sur réception de ce message, la station 14A, 14B, 14C s'active.

Un deuxième message de test 102 identique au premier message de test 100 est alors envoyé par le superviseur de transfert de données 16 vers la station 14A, 14B, 14C. La réception de ce deuxième message 102 résulte en une réponse de la station 14A, 14B, 14C qui émet à son tour un message de test 104 identique au message 102.

A réception de ce message de test 104, le superviseur de transfert de données 16 envoie un premier message 106 de table de définition de données échangées.

Le premier message 106 présente un indicateur de type de message 65 correspondant à un message de table de définition de données échangées, un indicateur de présence 66 correspondant toujours à une absence sur le lien de transfert 17, et un indicateur de mode 68 correspondant toujours à un mode d'attente.

Le contenu du champ de données 64 du message 106 comprend une liste de noms de données de simulation que devra émettre la station 14A, 14B, 14C lors de l'activation du mode de simulation.

En réponse au message 106, la station 14A, 14B, 14C émet un deuxième message 108 de table de définition de données échangées. Le champ de données du message 108 comprend une liste des données de simulation qui devront être fournies par le superviseur de transfert de données 16 à la station 14A, 14B, 14C.

L'échange des messages 106, 108 correspond à une phase dite de « serrage de main » (« handshake » en anglais) qui cale l'échange de données de simulation entre le superviseur de transfert de données 16 et chaque station de test 14A, 14B, 14C.

Une fois l'échange des messages 106, 108 effectué, la station 14A, 14B, 14C est active.

Le superviseur de transfert de données 16 continue à envoyer périodiquement des messages de test 102, dans lequel l'indicateur de présence 68 correspond à une présence de la station 14A, 14B, 14C sur le lien de transfert 17. La station 14A, 14B, 14C répond à chaque message de test 102 par un message de test 104 dans lequel l'indicateur de présence 68 correspond à une présence de la station 14A, 14B, 14C sur le lien de transfert 17.

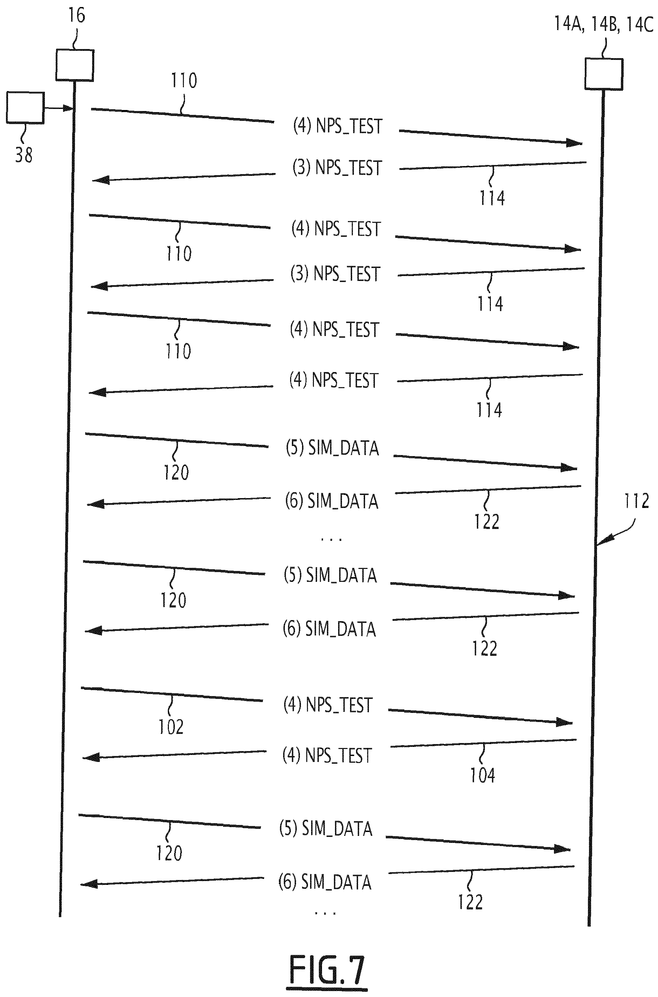

En référence à la figure 7, lorsque l'utilisateur souhaite lancer la fourniture de données de simulation par chaque station 14A, 14B, 14C activée, il utilise un écran d'interface de l'interface homme-machine 38 pour basculer le système de partage de données 10 dans un mode de fourniture de données.

Le superviseur de transfert de données 16 envoie au moins un message de test 110, dans lequel l'indicateur de mode 68 a été basculé en mode de transfert de données de simulation.

A réception du message 110, la station 14A, 14B, 14C interprète le message comme une commande du mode de fourniture de données de simulation et bascule dans ce mode.

Toutefois, le basculement dans ce mode n'est pas forcément immédiat, et plusieurs messages de test 110 peuvent être envoyés avant que le basculement effectif ne se produise à l'instant 112. Tant que le basculement dans le mode de transfert de données de simulation n'est pas effectif au niveau de la station 14A, 14B, 14C, celle-ci renvoie, en réponse à chaque message 110, un message de test 114 présentant toujours un indicateur de mode 68 correspondant à un mode d'attente.

Dès que le basculement est effectué à l'instant 112, en réponse à chaque message 110, la station 14A, 14B, 14C envoie un message de test 116, dans lequel l'indicateur de présence 66 indique la présence de la station 14A, 14B, 14C sur le lien de transfert 17, et dans lequel le l'indicateur de mode 68 correspond à un mode de transfert de données de simulation.

Après réception du message 116, le superviseur de transfert de données 16 lance l'échange de données entre le superviseur de transfert de données 16 et la station 14A, 14B, 14C.

A cet effet, le superviseur de transfert de données 16 émet périodiquement sur le lien de transfert 17 des messages 120 de données de simulation à l'attention de la station 14A, 14B, 14C.

Chaque message de données de simulation 120 comporte un indicateur de type de message 65 correspondant à un message de données de simulation, un indicateur de mode 68 indiquant un mode de transfert de données de simulation et un indicateur de présence 66 indiquant la présence de la station 14A, 14B, 14C sur le lien de transfert 17.

Le champ de données 64 de chaque message 120 comporte les données de simulation attendues par la station 14A, 14B, 14C tel que définies dans le message de table de définition de données échangées 108 émis par la station 14A, 14B, 14C lors du « serrage de main ».

En réponse à chaque message de données de simulation 120 émis par le superviseur de transfert de données 16 à destination de la station 14A, 14B, 14C, la station 14A, 14B, 14C renvoie aussi un message 122 de données de simulation.

Le message 122 comporte un indicateur de type de message 65 correspondant à un message de données de simulation, un indicateur de mode 68 correspondant à un mode de transfert de données de simulation, et un indicateur de présence 66 indiquant la présence de la station 14A, 14B, 14C sur le lien de transfert 17.

Le message 122 comporte en outre dans le champ de données 64, les données de simulation requises par le superviseur de transfert de données 16, tel que définies dans la table de définition envoyée dans le message de table de définition de données échangées 106 envoyé par le superviseur de transfert de données 16.

Éventuellement, entre deux échanges de messages de données 120, 122, un échange de messages de test 102, 104 peut se produire, comme illustré sur la figure 7.

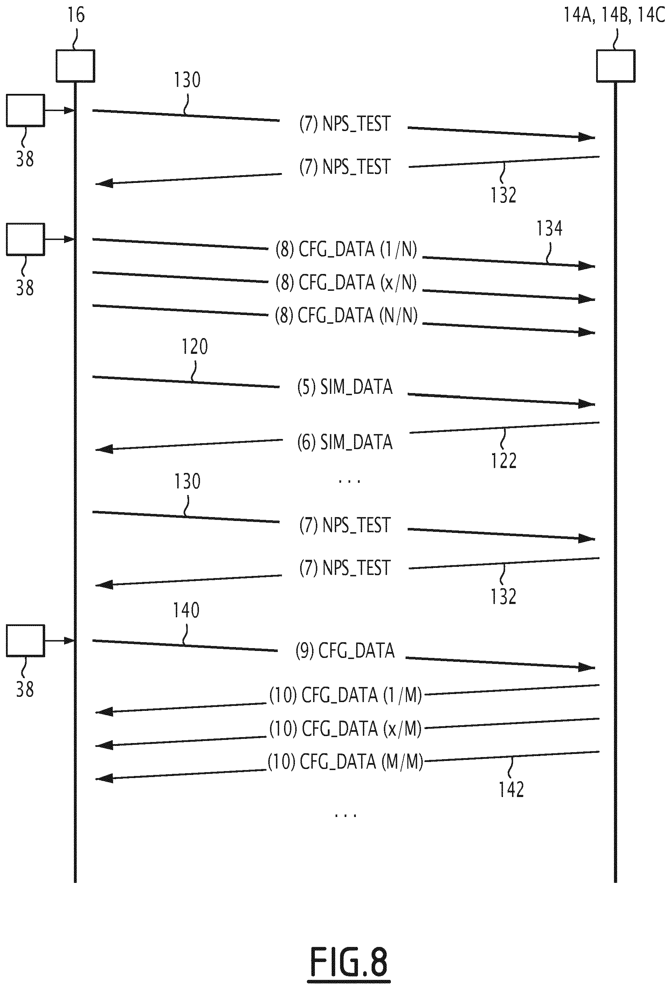

En référence à la figure 8, lorsque l'utilisateur souhaite envoyer un ordre de commande d'un état d'un équipement 18 d'une station 14A, 14B, 14C pour dévier par rapport au mode courant, par exemple pour déclencher un mode dégradé, ou engendrer une panne, il utilise l'interface homme-machine 38 pour commander au moins un état d'au moins un équipement 18 de la station 14A, 14B, 14C.

Dans un premier temps, il active le mode de configuration d'états à l'aide d'un écran d'interface de l'interface homme-machine 38.

L'activation du mode de configuration se traduit par l'envoi sur le lien de transfert 17, par le superviseur de transfert de données 16, d'un message de test 130 comportant un indicateur de type de message 65 correspondant à un message de test, un indicateur de présence 66 indiquant la présence de la station 14A, 14B, 14C sur le lien de transfert 17, et un indicateur de mode 68 qui, dans cet exemple, correspond à un mode conjoint de transmission de données de simulation et de données de configuration.

La station 14A, 14B, 14C bascule alors dans ce mode, dans lequel elle est apte à recevoir des données de commandes d'états de la part du superviseur de transfert de données 16, et à appliquer à chaque équipement 18 la commande d'états reçue.

La station 14A, 14B, 14C renvoie un message 132 de test sur le lien de transfert 17. Le message 132 comprend un indicateur de type de message 65 correspondant à un message de test, un indicateur de présence 66 indiquant la présence de la station 14A, 14B, 14C sur le lien de transfert 17, et un indicateur de mode 68 correspondant à un mode conjoint de transfert de données de simulation et de données de configuration.

Sur réception de ce message 132, l'interface homme-machine 38 est mise à jour et affiche, sur un écran d'interface, un indicateur de passage dans le mode de configuration.

L'utilisateur peut alors sélectionner les états qu'il souhaite commander sur les équipements 18 de la station 14A, 14B, 14C à l'aide de l'interface homme-machine 38.

La commande de ces états engendre des données de configuration d'états. Suite à cette commande, au moins un message de données de configuration 134 est engendré par le superviseur de transfert de données 16.

Chaque message de données de configuration 134 comporte un indicateur de type de message 65 correspondant à un message de données de configuration, et un indicateur de mode 68 correspondant à un mode simultané d'envoi de données de simulation et de données de configuration.

Chaque message de données de configuration 134 comporte en outre un indicateur de présence 66 indiquant une présence de la station 14A, 14B, 14C sur le lien de transfert 17.

Les messages émis par le superviseur de transfert de données 16 comportent en outre un champ de requête 69 désactivé, qui indique que le superviseur ne souhaite pas recevoir de données de configuration d'états de la part de la station 14A, 14B, 14C. Le drapeau 74 indiquant une réponse à une telle requête est également désactivé.

Le champ de données 64 contient une configuration d'états du ou des équipements 18 correspondant à la commande définie à l'aide de l'interface homme-machine 38.

Sur réception du message de données de configuration 134, la station 14A, 14B, 14C pilote le ou les équipements 18 pour qu'ils adoptent la configuration d'états qui sont contenus dans le champ de données 64 des messages 134.

Les états définis dans les données de configuration d'états reçues par le message 134 écrasent les états précédemment occupés par le ou chaque équipement 18 de la station 14A, 14B, 14C. Ceci permet notamment d'obtenir des déviations par rapport au mode nominal, de déclencher des modes dégradés, voire d'engendrer des pannes.

Eventuellement, lorsque le mode d'opération est un mode de transmission conjointe de données de simulation et de données de configuration, des messages 120, 122 de données de simulation, et éventuellement, des messages de test 130, 132, sont transmis comme décrit précédemment.

Lorsque le calculateur de l'interface homme-machine 38 souhaite rafraichir les données de configuration d'états qu'il possède, il envoie un message 140 de données de configuration, dans lequel le champ de requête 69 est activé pour requérir que la station 14A, 14B, 14C envoie toutes les données de configuration d'états du ou des équipements 18 de la station 14A, 14B, 14C.

Le message de données de configuration 140 comporte comme précédemment un indicateur de type de message 65 correspondant à un message de données de configuration, un indicateur de présence 66 indiquant la présence de la station 14A, 14B, 14C sur le lien de transfert 17, et un indicateur de mode 68 correspondant à un mode simultané d'envoi de données de simulation et de données de configuration.

En réponse au message 140, la station 14A, 14B, 14C renvoie au moins un message 142 de données de configuration. Le message 142 comporte un indicateur de type de message 65 correspondant à un message de données de configuration, un indicateur de mode 68 correspondant à un mode simultané d'envoi de données de simulation et de données de configuration, un indicateur de présence 66 indiquant la présence de la station 14A, 14B, 14C sur le lien de transfert 17, un champ de requête 69 désactivé, et un drapeau 74 activé indiquant une réponse à une requête.

Le ou chaque champ de données 64 contient alors des données de configuration d'états du ou des équipements 18 de la station 14A, 14B, 14C qui sont reçus par le superviseur de transfert de données 16.

Sur réception de ces états, l'interface homme machine 38 met à jour les écrans d'interfaces affichés pour l'utilisateur sur l'afficheur 40.

Le procédé de partage de données qui vient d'être décrit, mis en œuvre dans un système de partage 10 selon l'invention, intégré au sein d'un banc d'essai avion 20, permet de faire communiquer plusieurs stations de test 14A, 14B, 14C de systèmes d'aéronef et un superviseur de transfert de données 16, afin de réaliser des essais qui ne nécessitent pas de disposer d'un aéronef complet et assemblé. Les systèmes d'aéronef peuvent ainsi provenir de fournisseurs variés, le système de partage 10 autorisant la mise en œuvre de tests multi-systèmes en présence de tous les systèmes d'aéronef sur le banc d'essai 12.

Le procédé de partage autorise notamment la récupération de toutes les données qui ne sont pas disponibles du fait que le banc d'essai 12 n'est pas un avion complet, en particulier, des données simulées par chaque système d'aéronef au sein d'une station de test 14A, 14B, 14C.

Les données de simulation produites par chaque station 14A, 14B, 14C, sont ainsi facilement rapatriées vers le superviseur de transfert de données 16, pour pouvoir alimenter chaque station 14A, 14B, 14C avec des données de simulation dont elle a besoin.

De même, le procédé de partage permet, depuis le superviseur de transfert de données 16, de configurer des états des équipements 18 des systèmes d'aéronef, autorisant la conduite d'essais hors des conditions nominales, en mode dégradé ou en présence de pannes.

Le procédé de transfert permet d'agir très simplement à distance sur chaque station de test 14A, 14B, 14C, en remplacement d'opérations manuelles qui pourraient être faites en face avant de chaque station de test 14A, 14B, 14C, en prenant en main l'interface homme machine propre à la station de test 14A, 14B, 14C. Ceci évite une opération très fastidieuse, notamment lorsque le nombre de stations de test 14A, 14B, 14C est élevé, par exemple supérieur à 20. S'il y a plus de 20 stations de test 14A, 14B, 14C, le procédé de transfert évite d'avoir à manipuler plus de 20 interfaces homme machine, avec potentiellement plus de 20 chartes graphiques différentes.

Le procédé de transfert permet en outre diffuser à un ensemble de stations de test 14A, 14B, 14C des pannes en cohérence. Par exemple, si un capteur de pression est en panne, l'information est diffusée de façon cohérente aux stations de test 14A, 14B, 14C qui ont besoin de connaitre cette information.

Le banc d'essai 12 est ainsi grandement simplifié, tout en offrant la possibilité d'effectuer des essais réalistes de fonctionnement, grâce à une transmission efficace et fiable des données entre les systèmes, utilisant un protocole commun pour les données de simulation et les données de configuration d'états.

Dans une variante, non représentée, le simulateur est propre à être commandée via l'IHM ou via des commandes externes pour effectuer un rejeu d'un essai précédent, en transmettant aux stations 14A, 14B, 14C, des messages de configuration d'états qui suivent un fichier prédéfini de script de commandes d'états en fonction du temps, qui peut être un précédent enregistrement.

## Revendications

1. Procédé de partage de données entre un superviseur (16) de transfert de données et une pluralité de stations (14A, 14B, 14C) de test de systèmes d'aéronef dans un banc d'essai (12) d'aéronef, le superviseur de transfert de données (16) et la pluralité de stations (14A, 14B, 14C) de test de systèmes d'aéronef étant raccordés entre eux par un lien (17) de transfert de données, le lien de transfert (17) étant propre à faire circuler des messages (60) comportant un entête (62) comprenant au moins un indicateur de type de message (65), chaque station (14A, 14B, 14C) étant propre à engendrer des données de simulation de paramètres d'au moins un équipement (18) d'un système d'aéronef et étant propre à recevoir des données de configuration d'états du au moins un équipement (18) du système d'aéronef, le procédé comportant les étapes suivantes :
- lorsqu'un mode de transfert de données de simulation est activé, émission, par la station (14A, 14B, 14C), à l'attention du superviseur de transfert de données (16), d'un message de données de simulation sur le lien de transfert (17), comprenant un entête (62) ayant un indicateur de type de message (65) correspondant à un message de données de simulation, et un champ de données (64) comprenant des données de simulation engendrées par la station (14A, 14B, 14C);
- lorsqu'un mode de transfert de données de configuration d'états d'au moins un équipement (18) de système d'aéronef est activé, émission par le superviseur de transfert de données (16), à l'attention de la station (14A, 14B, 14C) d'un message de données de configuration sur le même lien de transfert (17), le message de données de configuration comportant un entête (62) ayant un indicateur de type de message (65) correspondant à un message de données de configuration, et un champ de données comprenant des données de configuration d'états de l'équipement (18).

2. Procédé selon la revendication 1, dans lequel tous les messages circulant sur le lien de transfert (17) ont la même syntaxe d'entête (62) incluant un indicateur de type de message (65).

3. Procédé selon la revendication 2, dans lequel la syntaxe d'entête (62) inclut un indicateur (72) de taille du message, un indicateur (66) de présence de la station (14A, 14B, 14C) sur le lien de transfert (17), un compteur (76) et/ou un indicateur de temps courant (78).

4. Procédé selon l'une quelconque des revendications précédentes, dans lequel chaque entête (62) comporte un indicateur (68) de mode de fonctionnement de la station (14A, 14B, 14C) choisi entre un mode d'attente, un mode de transmission de données de simulation, un mode de transmission de données de configuration d'états, et/ou un mode conjoint de transmission de données de simulation et de données de configuration d'états.

5. Procédé selon la revendication 4, comprenant une étape d'activation de la station (14A, 14B, 14C), l'étape d'activation comportant l'émission par le superviseur de transfert de données (16) d'un message d'activation comportant un indicateur de mode de fonctionnement (68) correspondant au mode de transfert de données de simulation et la réception du message d'activation par la station (14A, 14B, 14C).

6. Procédé selon la revendication 5, dans lequel le message d'activation est un message de test, dépourvu de données dans le champ de données, l'étape d'activation comportant l'envoi, après réception du message de test, d'un autre message de test par la station (14A, 14B, 14C), l'autre message de test comprenant un entête (62) présentant un indicateur de mode de fonctionnement (68) correspondant à un mode de transfert de données de simulation.

7. Procédé selon l'une quelconque des revendications précédentes, dans lequel lorsque le mode de transfert de données de simulation est activé, chaque émission par la station (14A, 14B, 14C) sur le lien de transfert (17) d'un message de données de simulation est déclenchée par la réception d'un message de données de simulation émis par le superviseur de transfert de données (16), le message émis par le superviseur de transfert de données (16) comportant un entête (62) ayant un indicateur de type de message (65) correspondant à un message de données de simulation, et un champ de données (64) contenant des données de simulation requises par la station (14A, 14B, 14C).

8. Procédé selon l'une quelconque des revendications précédentes, comportant une étape d'initialisation, dans lequel le superviseur de transfert de données (16) émet un message de table de définition de données échangées présentant un entête (62) ayant un indicateur de type de message (65) correspondant à un message de table de définition de données échangées, et un champ de données (64) comprenant une table de données listant les noms des données de simulation requises devant être produites par la station (14A, 14B, 14C).

9. Procédé selon la revendication 8, dans lequel, après réception du message de table de définition de données échangées émis par le superviseur de transfert de données (16), la station (14A, 14B, 14C) émet un autre message de table de définition de données échangées présentant un entête (62) ayant un indicateur de type de message correspondant à un message de table de définition de données échangées et un champ de données (64) comportant une table de données listant les noms des données de simulation requises devant être fournies à la station (14A, 14B, 14C) par le superviseur de transfert de données (16).

10. Procédé selon l'une quelconque des revendications précédentes, dans lequel le lien de transfert de données met en oeuvre un protocole pair à pair, avantageusement utilisant le protocole IPV4, chaque station (14A, 14B, 14C) et le superviseur de transfert de données (16) étant identifié par une adresse, notamment une adresse IP.

11. Procédé selon l'une quelconque des revendications précédentes, dans lequel les données de simulation sont des données de simulation de variables d'environnement, par exemple des données de capteurs de mesures physiques, les données de configuration d'états étant des données d'état d'un équipement (18) de système d'aéronef, notamment des états de fonctionnement dégradé ou de panne de l'équipement (18) de système d'aéronef.

12. Procédé selon l'une quelconque des revendications précédentes, dans lequel, dans le mode de transmission de données de configuration d'états, le procédé comporte préalablement à l'émission des données de configuration d'états, une définition, par un utilisateur sur une interface homme-machine (38), d'au moins un état commandé d'un équipement (18) du système d'aéronef, les données de configuration étant générées à partir de la définition des états sur l'interface homme-machine (38).

13. Système de partage de données entre un superviseur (16) de transfert de données et une pluralité de stations (14A, 14B, 14C) de test de systèmes d'aéronef d'un banc d'essai (12) d'aéronef , le superviseur de transfert de données (16) et la pluralité de stations (14A, 14B, 14C) de test de systèmes d'aéronef étant raccordés entre eux par un lien (17) de transfert de données, le lien de transfert (17) étant propre à faire circuler des messages (60) comportant un entête (62) comprenant au moins un indicateur de type de message (65),
chaque station (14A, 14B, 14C) étant propre à engendrer des données de simulation de paramètres d'au moins un équipement (18) d'un système d'aéronef et étant propre à recevoir des données de configuration d'états du au moins un équipement (18) du système d'aéronef,
la station (14A, 14B, 14C) étant propre à émettre, à l'attention du superviseur de transfert de données (16), lorsqu'un mode de transfert de données de simulation est activé, un message de données de simulation sur le lien de transfert (17), comprenant un entête (62) ayant un indicateur de type de message (65) correspondant à un message de données de simulation, et un champ de données (64) comprenant des données de simulation engendrées par la station (14A, 14B, 14C) ;
- le superviseur de transfert de données (16) étant propre à émettre, à l'attention de la station (14A, 14B, 14C), lorsqu'un mode de transfert de données de configuration d'états d'au moins un équipement (18) de système d'aéronef est activé, un message de données de configuration sur le même lien de transfert (17), le message de données de configuration comportant un entête (62) ayant un indicateur de type de message (65) correspondant à un message de données de configuration, et un champ de données comprenant des données de configuration d'états de l'équipement (18).

14. Station de test (14A, 14B, 14C) de système d'aéronef pour un banc d'essai (12) d'aéronef destinée à être raccordée à un superviseur (16) de transfert de données par un lien (17) de transfert de données, le lien de transfert (17) étant propre à faire circuler des messages (60) comportant un entête (62) ayant au moins un indicateur de type de message (65),
la station (14A, 14B, 14C) étant propre à engendrer des données de simulation de paramètres d'au moins un équipement (18) d'un système d'aéronef et étant propre à recevoir des données de configuration d'états du au moins un équipement (18) du système d'aéronef,
la station (14A, 14B, 14C) étant propre à émettre, à l'attention du superviseur de transfert de données (16), lorsqu'un mode de transfert de données de simulation est activé, un message de données de simulation sur le lien de transfert (17), comprenant un entête (62) ayant un indicateur de type de message (65) correspondant à un message de données de simulation, et un champ de données (64) comprenant des données de simulation engendrées par la station (14A, 14B, 14C) ;
la station (14A, 14B, 14C) étant propre à recevoir, lorsqu'un mode de transfert de données de configuration d'états d'au moins un équipement (18) de système d'aéronef est activé, un message de données de configuration provenant du superviseur de transfert de données (16) sur le même lien de transfert (17), le message de données de configuration comportant un entête (62) ayant un indicateur de type de message (65) correspondant à un message de données de configuration, et un champ de données comprenant des données de configuration d'états de l'équipement (18), la station (14A, 14B, 14C) étant propre à piloter au moins un état d'un équipement (18) en utilisant les données de configuration d'états de l'équipement (18).

15. Superviseur (16) de transfert de données destiné à être relié à une pluralité de stations (14A, 14B, 14C) de test de systèmes d'aéronef dans un banc d'essai d'aéronef (12) par un lien (17) de transfert de données, le lien de transfert (17) étant propre à faire circuler des messages (60) comportant un entête (62) comprenant au moins un indicateur de type de message (65),
chaque station (14A, 14B, 14C) étant propre à engendrer des données de simulation de paramètres d'au moins un équipement (18) d'un système d'aéronef et étant propre à recevoir des données de configuration d'états du au moins un équipement (18) du système d'aéronef, le superviseur de transfert de données (16) étant propre, lorsqu'un mode de transfert de données de simulation est activé, de recevoir au moins un message de données de simulation provenant d'au moins une station (14A, 14B, 14C) sur le lien de transfert (17), le message de données de simulation comprenant un entête (62) ayant un indicateur de type de message (65) correspondant à un message de données de simulation, et un champ de données (64) comprenant des données de simulation engendrées par la station (14A, 14B, 14C) et étant propre à utiliser les données de simulation, notamment pour les afficher sur une interface homme machine (38) ou pour les renvoyer à au moins une station (14A, 14B, 14C) via un message de données de simulation sur le lien de transfert (17);
- lorsqu'un mode de transfert de données de configuration d'états d'au moins un équipement (18) de système d'aéronef est activé, le superviseur de transfert de données (16) étant propre à émettre, à l'attention de la station (14A, 14B, 14C) d'un message de données de configuration sur le même lien de transfert (17), le message de données de configuration comportant un entête (62) ayant un indicateur de type de message (65) correspondant à un message de données de configuration, et un champ de données comprenant des données de configuration d'états de l'équipement (18).

## Patentansprüche

1. Verfahren zum Teilen von Daten zwischen einem Datenübertragungsüberwacher (16) und einer Vielzahl von Flugzeugsystem-Teststationen (14A, 14B, 14C) in einem Flugzeugprüfstand (12), wobei der Datenübertragungsüberwacher (16) und die Vielzahl von Flugzeugsystem-Teststationen (14A, 14B, 14C) über eine Datenübertragungsverbindung (17) miteinander verbunden sind, wobei die Übertragungsverbindung (17) geeignet ist, um Nachrichten (60) zu übermitteln, umfassend einen Header (62), umfassend mindestens einen Nachrichtentypindikator (65), wobei jede Station (14A, 14B, 14C) geeignet ist, um Parametersimulationsdaten von mindestens einer Ausrüstung (18) eines Flugzeugsystems zu erzeugen, und geeignet ist, um Zustandskonfigurationsdaten der mindestens einen Ausrüstung (18) des Flugzeugsystems zu empfangen, wobei das Verfahren die folgenden Schritte aufweist:
- wenn ein Simulationsdatenübertragungsmodus aktiviert ist, Senden, durch die Station (14A, 14B, 14C) an den Datenübertragungsüberwacher (16), einer Simulationsdatennachricht auf der Übertragungsverbindung (17), umfassend einen Header (62), der einen Nachrichtentypindikator (65) aufweist, der einer Simulationsdatennachricht entspricht, und ein Datenfeld (64), umfassend von der Station (14A, 14B, 14C) erzeugte Simulationsdaten;
- wenn ein Zustandskonfigurationsdaten-Übertragungsmodus von mindestens einer Ausrüstung (18) eines Flugzeugsystems aktiviert ist, Senden, durch den Datenübertragungsüberwacher (16) an die Station (14A, 14B, 14C), einer Konfigurationsdatennachricht auf derselben Übertragungsverbindung (17), die Konfigurationsdatennachricht umfassend einen Header (62), der einen Nachrichtentypindikator (65) aufweist, der einer Konfigurationsdatennachricht entspricht, und ein Datenfeld, umfassend Zustandskonfigurationsdaten der Ausrüstung (18).

2. Verfahren nach Anspruch 1, wobei alle auf der Übertragungsverbindung (17) übertragenen Nachrichten dieselbe Header-Syntax (62) aufweisen, die einen Nachrichtentypindikator (65) beinhalten.

3. Verfahren nach Anspruch 2, wobei die Header-Syntax (62) einen Größenindikator (72) der Nachricht, einen Vorhandenseinsindikator (66) der Station (14A, 14B, 14C) auf der Übertragungsverbindung (17), einen Zähler (76) und/oder einen aktuellen Zeitindikator (78) beinhaltet.

4. Verfahren nach einem der vorherigen Ansprüche, wobei jeder Header (62) einen Betriebsmodusindikator (68) der Station (14A, 14B, 14C) umfasst, ausgewählt aus einem Wartemodus, einem Simulationsdatenübertragungsmodus, einem Zustandskonfigurationsdaten-Übertragungsmodus und/oder einem gemeinsamen Simulationsdaten- und Zustandskonfigurationsdaten-Übertragungsmodus.

5. Verfahren nach Anspruch 4, umfassend einen Aktivierungsschritt der Station (14A, 14B, 14C), der Aktivierungsschritt umfassend das Senden, durch den Datenübertragungsüberwacher (16), einer Aktivierungsnachricht, umfassend einen Betriebsmodusindikator (68), der dem Simulationsdatenübertragungsmodus entspricht, und das Empfangen der Aktivierungsnachricht durch die Station (14A, 14B, 14C).

6. Verfahren nach Anspruch 5, wobei die Aktivierungsnachricht eine Testnachricht ohne Daten in dem Datenfeld ist, der Aktivierungsschritt umfassend das Senden, nach Empfangen der Testnachricht, einer anderen Testnachricht durch die Station (14A, 14B, 14C), die andere Testnachricht umfassend einen Header (62), der einen Betriebsmodusindikator (68) aufweist, der einem Simulationsdatenübertragungsmodus entspricht.

7. Verfahren nach einem der vorherigen Ansprüche, wobei, wenn der Simulationsdatenübertragungsmodus aktiviert ist, jedes Senden, durch die Station (14A, 14B, 14C) auf der Übertragungsverbindung (17), einer Simulationsdatennachricht durch den Empfang einer von dem Datenübertragungsüberwacher (16) gesendeten Simulationsdatennachricht ausgelöst wird, die von dem Datenübertragungsüberwacher (16) gesendete Nachricht umfassend einen Header (62), der einen Nachrichtentypindikator (65) aufweist, der einer Simulationsdatennachricht entspricht, und ein Datenfeld (64), das von der Station (14A, 14B, 14C) angeforderte Simulationsdaten enthält.

8. Verfahren nach einem der vorherigen Ansprüche, umfassend einen Initialisierungsschritt, wobei der Datenübertragungsüberwacher (16) eine Nachricht einer Definitionstabelle ausgetauschter Daten sendet, die einen Header (62) aufweist, der einen Nachrichtentypindikator (65) aufweist, der einer Nachricht einer Definitionstabelle ausgetauschter Daten entspricht, und ein Datenfeld (64), umfassend eine Datentabelle, die die Namen der angeforderten Simulationsdaten auflistet, die von der Station (14A, 14B, 14C) erzeugt werden müssen.

9. Verfahren nach Anspruch 8, wobei nach Empfang der von dem Datenübertragungsüberwacher (16) gesendeten Nachricht der Definitionstabelle ausgetauschter Daten die Station (14A, 14B, 14C) eine andere Nachricht der Definitionstabelle ausgetauschter Daten sendet, die einen Header (62) mit einem Nachrichtentypindikator aufweist, der einer Nachricht der Definitionstabelle ausgetauschter Daten entspricht, und ein Datenfeld (64), umfassend eine Datentabelle, die die Namen der angeforderten Simulationsdaten auflistet, die der Station (14A, 14B, 14C) durch den Datenübertragungsüberwacher (16) bereitgestellt werden müssen.

10. Verfahren nach einem der vorherigen Ansprüche, wobei die Datenübertragungsverbindung ein Peer-to-Peer-Protokoll implementiert, vorteilhafterweise unter Verwendung des IPV4-Protokolls, wobei jede Station (14A, 14B, 14C) und der Datenübertragungsüberwacher (16) durch eine Adresse, insbesondere eine IP-Adresse, identifiziert sind.

11. Verfahren nach einem der vorherigen Ansprüche, wobei die Simulationsdaten Umgebungsvariablensimulationsdaten sind, beispielsweise Daten von physikalischen Messsensoren, wobei die Zustandskonfigurationsdaten Zustandsdaten einer Ausrüstung (18) eines Flugzeugsystems sind, insbesondere Zustände eines verschlechterten Betriebs oder eines Ausfalls der Ausrüstung (18) des Flugzeugsystems.

12. Verfahren nach einem der vorherigen Ansprüche, wobei in dem Zustandskonfigurationsdaten-Übertragungsmodus das Verfahren vor dem Senden der Zustandskonfigurationsdaten eine Definition, durch einen Benutzer auf einer Mensch-Maschine-Schnittstelle (38), mindestens eines befohlenen Zustands einer Ausrüstung (18) des Flugzeugsystems umfasst, wobei die Konfigurationsdaten anhand der Definition der Zustände auf der Mensch-Maschine-Schnittstelle (38) erzeugt werden.

13. System zum Teilen von Daten zwischen einem Datenübertragungsüberwacher (16) und einer Vielzahl von Flugzeugsystem-Teststationen (14A, 14B, 14C) eines Flugzeugprüfstands (12), wobei der Datenübertragungsüberwacher (16) und die Vielzahl von Flugzeugsystem-Teststationen (14A, 14B, 14C) über eine Datenübertragungsverbindung (17) miteinander verbunden sind, wobei die Übertragungsverbindung (17) geeignet ist, um Nachrichten (60) zu übermitteln, umfassend einen Header (62), umfassend mindestens einen Nachrichtentypindikator (65),
wobei jede Station (14A, 14B, 14C) geeignet ist, um Parametersimulationsdaten von mindestens einer Ausrüstung (18) eines Flugzeugsystems zu erzeugen, und geeignet ist, um Zustandskonfigurationsdaten der mindestens einen Ausrüstung (18) des Flugzeugsystems zu empfangen,
die Station (14A, 14B, 14C) geeignet ist, um an den Datenübertragungsüberwacher (16), wenn ein Simulationsdatenübertragungsmodus aktiviert ist, eine Simulationsdatennachricht auf der Übertragungsverbindung (17) zu senden, umfassend einen Header (62), der einen Nachrichtentypindikator (65) aufweist, der einer Simulationsdatennachricht entspricht, und ein Datenfeld (64), umfassend von der Station (14A, 14B, 14C) erzeugte Simulationsdaten;
- wobei der Datenübertragungsüberwacher (16) geeignet ist, um an die Station (14A, 14B, 14C), wenn ein Zustandskonfigurationsdaten-Übertragungsmodus von mindestens einer Ausrüstung (18) eines Flugzeugsystems aktiviert ist, eine Konfigurationsdatennachricht auf derselben Übertragungsverbindung (17) zu senden, die Konfigurationsdatennachricht umfassend einen Header (62), umfassend einen Nachrichtentypindikator (65), der einer Konfigurationsdatennachricht entspricht, und ein Datenfeld, umfassend Zustandskonfigurationsdaten der Ausrüstung (18).

14. Teststation (14A, 14B, 14C) eines Flugzeugsystems für einen Flugzeugprüfstand (12), die dazu bestimmt ist, über eine Datenübertragungsverbindung (17) an einen Datenübertragungsüberwacher (16) angeschlossen zu werden, wobei die Übertragungsverbindung (17) geeignet ist, um Nachrichten (60) zu übermitteln, umfassend einen Header (62), der mindestens einen Nachrichtentypindikator (65) aufweist,
wobei die Station (14A, 14B, 14C) geeignet ist, um Parametersimulationsdaten von mindestens einer Ausrüstung (18) eines Flugzeugsystems zu erzeugen, und geeignet ist, um Zustandskonfigurationsdaten der mindestens einen Ausrüstung (18) des Flugzeugsystems zu empfangen,
die Station (14A, 14B, 14C) geeignet ist, um an den Datenübertragungsüberwacher (16), wenn ein Simulationsdatenübertragungsmodus aktiviert ist, eine Simulationsdatennachricht auf der Übertragungsverbindung (17) zu senden, umfassend einen Header (62), der einen Nachrichtentypindikator (65) aufweist, der einer Simulationsdatennachricht entspricht, und ein Datenfeld (64), umfassend von der Station (14A, 14B, 14C) erzeugte Simulationsdaten;
die Station (14A, 14B, 14C) geeignet ist, um, wenn ein Zustandskonfigurationsdaten-Übertragungsmodus von mindestens einer Ausrüstung (18) eines Flugzeugsystems aktiviert ist, eine von dem Datenübertragungsüberwacher (16) kommende Konfigurationsdatennachricht auf derselben Übertragungsverbindung (17) zu empfangen, die Konfigurationsdatennachricht umfassend einen Header (62), der einen Nachrichtentypindikator (65) aufweist, der einer Konfigurationsdatennachricht entspricht, und ein Datenfeld, umfassend Zustandskonfigurationsdaten der Ausrüstung (18), wobei die Station (14A, 14B, 14C) geeignet ist, um unter Verwendung der Zustandskonfigurationsdaten der Ausrüstung (18) mindestens einen Zustand einer Ausrüstung (18) zu steuern.

15. Datenübertragungsüberwacher (16), der dazu bestimmt ist, über eine Datenübertragungsverbindung (17) mit einer Vielzahl von Flugzeugsystem-Teststationen (14A, 14B, 14C) in einem Flugzeugprüfstand (12) verbunden zu sein, wobei die Übertragungsverbindung (17) geeignet ist, um Nachrichten (60) zu übermitteln, umfassend einen Header (62), der mindestens einen Nachrichtentypindikator (65) aufweist,
wobei jede Station (14A, 14B, 14C) geeignet ist, um Parametersimulationsdaten von mindestens einer Ausrüstung (18) eines Flugzeugsystems zu erzeugen, und geeignet ist, um Zustandskonfigurationsdaten der mindestens einen Ausrüstung (18) des Flugzeugsystems zu empfangen, wobei der Datenübertragungsüberwacher (16) geeignet ist, um, wenn ein Simulationsdatenübertragungsmodus aktiviert ist, mindestens eine von mindestens einer Station (14A, 14B, 14C) kommende Simulationsdatennachricht auf der Übertragungsverbindung (17) zu empfangen, die Simulationsdatennachricht umfassend einen Header (62), der einen Nachrichtentypindikator (65) aufweist, der einer Simulationsdatennachricht entspricht, und ein Datenfeld (64), umfassend von der Station (14A, 14B, 14C) erzeugte Simulationsdaten, und geeignet ist, um die Simulationsdaten zu verwenden, insbesondere um sie auf einer Mensch-Maschine-Schnittstelle (38) anzuzeigen oder um sie über eine Simulationsdatennachricht auf der Übertragungsverbindung (17) an mindestens eine Station (14A, 14B, 14C) zurückzusenden;
- wobei, wenn ein Zustandskonfigurationsdaten-Übertragungsmodus von mindestens einer Ausrüstung (18) eines Flugzeugsystems aktiviert ist, der Datenübertragungsüberwacher (16) geeignet ist, um eine Konfigurationsdatennachricht auf derselben Übertragungsverbindung (17) an die Station (14A, 14B, 14C) zu senden, die Konfigurationsdatennachricht umfassend einen Header (62), der einen Nachrichtentypindikator (65) aufweist, der einer Konfigurationsdatennachricht entspricht, und ein Datenfeld, umfassend Zustandskonfigurationsdaten der Ausrüstung (18).

## Claims

1. A method for sharing data between a data transfer supervisor (16) and a plurality of aircraft system test stations (14A, 14B, 14C) in an aircraft test bench (12), the data transfer supervisor (16) and the plurality of aircraft system test stations (14A, 14B, 14C) being connected together by a data transfer link (17), the transfer link (17) being capable of carrying messages (60) including a header (62) comprising at least one message type indicator (65), each station (14A, 14B, 14C) being suitable for generating simulation data of parameters of at least one item of equipment (18) of an aircraft system and being suitable for receiving state configuration data of the at least one item of equipment (18) of the aircraft system, the method including the following steps:
- when a simulation data transfer mode is activated, sending, by the station (14A, 14B, 14C), to the data transfer supervisor (16), a simulation data message on the transfer link (17), comprising a header (62) having a message type indicator (65) corresponding to a simulation data message, and a data field (64) comprising simulation data generated by the station (14A, 14B, 14C);
- when a mode for transferring state configuration data of at least one item of equipment (18) of an aircraft system is activated, sending by the data transfer supervisor (16), to the station (14A, 14B, 14C), a configuration data message on the same transfer link (17), the configuration data message including a header (62) having a message type indicator (65) corresponding to a configuration data message, and a data field comprising state configuration data of the equipment (18).

2. The method according to claim 1, wherein all the messages circulating on the transfer link (17) have the same header syntax (62) including a message type indicator (65).

3. The method according to claim 2, wherein the header syntax (62) includes a message size indicator (72), a presence indicator (66) of the station (14A, 14B, 14C) on the transfer link (17), a counter (76), and/or a current time indicator (78).

4. The method according to any one of the preceding claims, wherein each header (62) includes an operating mode indicator (68) of the station (14A, 14B, 14C) selected from a standby mode, a simulation data transmission mode, a state configuration data transmission mode, and/or a joint simulation data and state configuration data transmission mode.

5. The method according to claim 4, comprising a step of activating the station (14A, 14B, 14C), the activation step including sending by the data transfer supervisor (16) an activation message including an operating mode indicator (68) corresponding to the simulation data transfer mode and receiving the activation message by the station (14A, 14B, 14C).

6. The method according to claim 5, wherein the activation message is a test message, devoid of data in the data field, the activation step including sending, after receipt of the test message, another test message by the station (14A, 14B, 14C), the other test message comprising a header (62) having an operating mode indicator (68) corresponding to a simulation data transfer mode.

7. The method according to any one of the preceding claims, wherein, when the simulation data transfer mode is activated, each sending by the station (14A, 14B, 14C) on the transfer link (17) of a simulation data message is triggered by receipt of a simulation data message sent by the data transfer supervisor (16), the message sent by the data transfer supervisor (16) including a header (62) having a message type indicator (65) corresponding to a simulation data message, and a data field (64) containing simulation data required by the station (14A, 14B, 14C).

8. The method according to any one of the preceding claims, including an initialization step, wherein the data transfer supervisor (16) sends a shared data definition table message having a header (62) with a message type indicator (65) corresponding to a shared data definition table message, and a data field (64) comprising a data table listing the names of the required simulation data to be produced by the station (14A, 14B, 14C).

9. The method according to claim 8, wherein, after receipt of the shared data definition table message sent by the data transfer supervisor (16), the station (14A, 14B, 14C) sends another shared data definition table message having a header (62) with a message type indicator corresponding to a shared data definition table message and a data field (64) including a data table listing the names of the simulation data required to be provided to the station (14A, 14B, 14C) by the data transfer supervisor (16).

10. The method according to any one of the preceding claims, wherein the data transfer link implements a peer-to-peer protocol, advantageously using the IPV4 protocol, each station (14A, 14B, 14C) and the data transfer supervisor (16) being identified by an address, in particular an IP address.

11. The method according to any one of the preceding claims, wherein the simulation data are simulation data of environment variables, for example, data from physical measurement sensors, the state configuration data being state data of an item of equipment (18) of an aircraft system, in particular degraded operating states or failure states of the item of equipment (18) of the aircraft system.

12. The method according to any one of the preceding claims, wherein, in the state configuration data transmission mode, the method includes, prior to sending the state configuration data, definition, by a user on a human-machine interface (38), of at least one commanded state of an item of equipment (18) of the aircraft system, the configuration data being generated from the definition of the states on the human-machine interface (38).

13. A data sharing system between a data transfer supervisor (16) and a plurality of aircraft system test stations (14A, 14B, 14C) of an aircraft test bench (12), the data transfer supervisor (16) and the plurality of aircraft system test stations (14A, 14B, 14C) being connected together by a data transfer link (17), the transfer link (17) being capable of carrying messages (60) including a header (62) comprising at least one message type indicator (65),
each station (14A, 14B, 14C) being suitable for generating simulation data of parameters of at least one item of equipment (18) of an aircraft system and being suitable for receiving state configuration data of the at least one item of equipment (18) of the aircraft system,
the station (14A, 14B, 14C) being suitable for sending, to the data transfer supervisor (16), when a simulation data transfer mode is activated, a simulation data message on the transfer link (17), comprising a header (62) having a message type indicator (65) corresponding to a simulation data message, and a data field (64) comprising simulation data generated by the station (14A, 14B, 14C);
- the data transfer supervisor (16) being suitable for sending, to the station (14A, 14B, 14C), when a mode for transferring state configuration data of at least one item of equipment (18) of an aircraft system is activated, a configuration data message on the same transfer link (17), the configuration data message including a header (62) having a message type indicator (65) corresponding to a configuration data message, and a data field comprising state configuration data of the equipment (18).

14. An aircraft system test station (14A, 14B, 14C) for an aircraft test bench (12) intended to be connected to a data transfer supervisor (16) by a data transfer link (17), the transfer link (17) being capable of carrying messages (60) including a header (62) having at least one message type indicator (65),
the station (14A, 14B, 14C) being suitable for generating simulation data of parameters of at least one item of equipment (18) of an aircraft system and being suitable for receiving state configuration data of the at least one item of equipment (18) of the aircraft system,
the station (14A, 14B, 14C) being suitable for sending, to the data transfer supervisor (16), when a simulation data transfer mode is activated, a simulation data message on the transfer link (17), comprising a header (62) having a message type indicator (65) corresponding to a simulation data message, and a data field (64) comprising simulation data generated by the station (14A, 14B, 14C);
the station (14A, 14B, 14C) being suitable for receiving, when a mode for transferring state configuration data of at least one item of equipment (18) of an aircraft system is activated, a configuration data message coming from the data transfer supervisor (16) on the same transfer link (17), the configuration data message including a header (62) having a message type indicator (65) corresponding to a configuration data message, and a data field comprising state configuration data of the equipment (18), the station (14A, 14B, 14C) being suitable for controlling at least one state of an item of equipment (18) using the state configuration data of the equipment (18).

15. A data transfer supervisor (16) intended to be connected to a plurality of aircraft system test stations (14A, 14B, 14C) in an aircraft test bench (12) by a data transfer link (17), the transfer link (17) being capable of carrying messages (60) including a header (62) comprising at least one message type indicator (65),
each station (14A, 14B, 14C) being suitable for generating simulation data of parameters of at least one item of equipment (18) of an aircraft system and being suitable for receiving state configuration data of the at least one item of equipment (18) of the aircraft system, the data transfer supervisor (16) being suitable, when a simulation data transfer mode is activated, for receiving at least one simulation data message coming from at least one station (14A, 14B, 14C) on the transfer link (17), the simulation data message comprising a header (62) having a message type indicator (65) corresponding to a simulation data message, and a data field (64) comprising simulation data generated by the station (14A, 14B, 14C) and being suitable for using the simulation data, in particular to display them on a human-machine interface (38) or to send them back to at least one station (14A, 14B, 14C) via a simulation data message on the transfer link (17);
- when a mode for transferring state configuration data of at least one item of equipment (18) of an aircraft system is activated, the data transfer supervisor (16) being suitable for sending, to the station (14A, 14B, 14C), a configuration data message on the same transfer link (17), the configuration data message including a header (62) having a message type indicator (65) corresponding to a configuration data message, and a data field comprising state configuration data of the equipment (18).
